(19)

Europäisches
Patentamt
European
Patent Office
Office européen
des brevets

(11) **EP 2 830 202 A1**

(12) **EUROPEAN PATENT APPLICATION**
published in accordance with Art. 153(4) EPC

(43) Date of publication:
**28.01.2015 Bulletin 2015/05**

(21) Application number: **12872011.7**

(22) Date of filing: **19.03.2012**

(51) Int Cl.:
*H02M 3/00* *(2006.01)*     *H02M 7/48* *(2007.01)*

(86) International application number:
**PCT/JP2012/057048**

(87) International publication number:
**WO 2013/140511 (26.09.2013 Gazette 2013/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Kabushiki Kaisha Yaskawa Denki Kitakyushu-shi, Fukuoka 806-0004 (JP)**

(72) Inventor: **TOUCHI, Masahiro**
**Kitakyushu-shi**
**Fukuoka 806-0004 (JP)**

(74) Representative: **Grünecker, Kinkeldey,**
**Stockmair & Schwanhäusser**
**Leopoldstrasse 4**
**80802 München (DE)**

(54) **POWER CONVERSION APPARATUS AND METHOD OF PROTECTING TRANSFORMER UNIT**

(57)     A power conversion apparatus includes a transformer unit, a power conversion unit, a current detection unit, a timer unit, a storage unit, a temperature estimation unit, and an instruction unit. The transformer unit transforms power supplied from a power supply. The power conversion unit converts the power transformed by the transformer unit into a prescribed alternating voltage and outputs it to a load. The current detection unit detects a current value of alternating current flowing depending on the load. The timer unit clocks an operation duration time of the power conversion unit. The storage unit stores therein in-operation information that indicates the correspondence relation between the temperature of a prescribed portion of the transformer unit measured in advance, the operation duration time, and the current value. The temperature estimation unit estimates the temperature of the prescribed portion at a certain operation duration time based on the current value detected by the current detection unit and the in-operation information. The instruction unit outputs prescribed instructions for heat-resistance protection of the transformer unit based on the temperature of the prescribed portion at the certain operation duration time estimated by the temperature estimation unit.

FIG.2

EP 2 830 202 A1

**Description**

Field

Embodiments of the disclosure relate to a power conversion apparatus and a method of protecting a transformer unit.

Background

Conventionally, there has been a power conversion apparatus that allows a transformer unit to transform power supplied from a power supply and a power conversion unit to convert the power transformed by the transformer unit into prescribed alternating current (AC) so as to output it to a motor. When the AC output to the motor increases in such a power conversion apparatus, there is a concern that the temperature of the transformer unit increases, which adversely affects the operation of the power conversion apparatus.

Therefore, there has been proposed a power conversion apparatus that detects the temperature of a transformer unit and changes, when the temperature of the transformer unit exceeds a prescribed temperature, operation control of a cooling fan for cooling the transformer unit or operation control of a power conversion unit so as to reduce the temperature of the transformer unit (for example, see Patent Literature 1).

Citation List

Patent Literature

Patent Literature 1: Japanese Patent Application Laid-open No. 2010-110075

Summary

Technical Problem

However, when the detected temperature of the transformer unit exceeds a prescribed temperature, there has been a possibility that the conventional power conversion apparatus, which starts the control of reducing the temperature of the transformer unit, fails to protect the transformer unit from heat.

More specifically, when the AC output to the motor increases, the transformer unit has a time lag from when the temperature of windings inside the transformer unit increases until when the temperature of the transformer unit itself increases. Therefore, when the detected temperature of the transformer unit reaches a prescribed temperature, the temperature of the inner windings may have already exceeded the rated temperature.

Accordingly, there is a possibility that the conventional power conversion apparatus fails to protect the transformer unit from heat because it is unlikely to reduce the temperature of the transformer unit before the windings inside the transformer unit exceeds the rated temperature.

In view of the foregoing, one aspect of the embodiments aims to provide a power conversion apparatus and a method of protecting a transformer unit capable of protecting the transformer unit from heat.

Solution to Problem

Advantageous Effects of Invention

One aspect of the embodiments can provide a power conversion apparatus and a method of protecting a transformer unit capable of protecting the transformer unit from heat.

Brief Description of Drawings

FIG. 1 is an explanatory view of a function capable of protecting a transformer unit included in a power conversion apparatus from heat.
FIG. 2 is a block diagram illustrating the configuration of the power conversion apparatus in accordance with embodiments of the present invention.
FIG. 3A is an explanatory view illustrating an example of actual measurement results for the temperature of prescribed portions measured during operation of a power conversion unit in accordance with the embodiments.

FIG. 3B is an explanatory view illustrating an example of actual measurement results for the temperature of prescribed portions measured during a stop of the operation of the power conversion unit in accordance with the embodiments.

FIG. 4 is a flowchart illustrating processing executed by a control unit of the power conversion apparatus in accordance with the embodiments.

FIG. 5 is a flowchart illustrating processing executed by the control unit of the power conversion apparatus in accordance with the embodiments.

FIG. 6 is a flowchart illustrating processing executed by the control unit of the power conversion apparatus in accordance with the embodiments.

FIG. 7 is a flowchart illustrating processing executed by the control unit of the power conversion apparatus in accordance with the embodiments.

FIG. 8 is a flowchart illustrating processing executed by the control unit of the power conversion apparatus in accordance with the embodiments.

Description of Embodiments

A power conversion apparatus and a method of protecting a transformer unit disclosed in the subject application are described in detail below with reference to the accompanying drawings. It should be noted that the embodiments below are not intended to limit this invention.

The power conversion apparatus in accordance with the present embodiments (hereinafter referred to simply as "power conversion apparatus") is provided with a transformer unit for transforming power supplied from a power supply and a power conversion unit for converting the power transformed by the transformer unit into a prescribed alternating voltage so as to output it to a load.

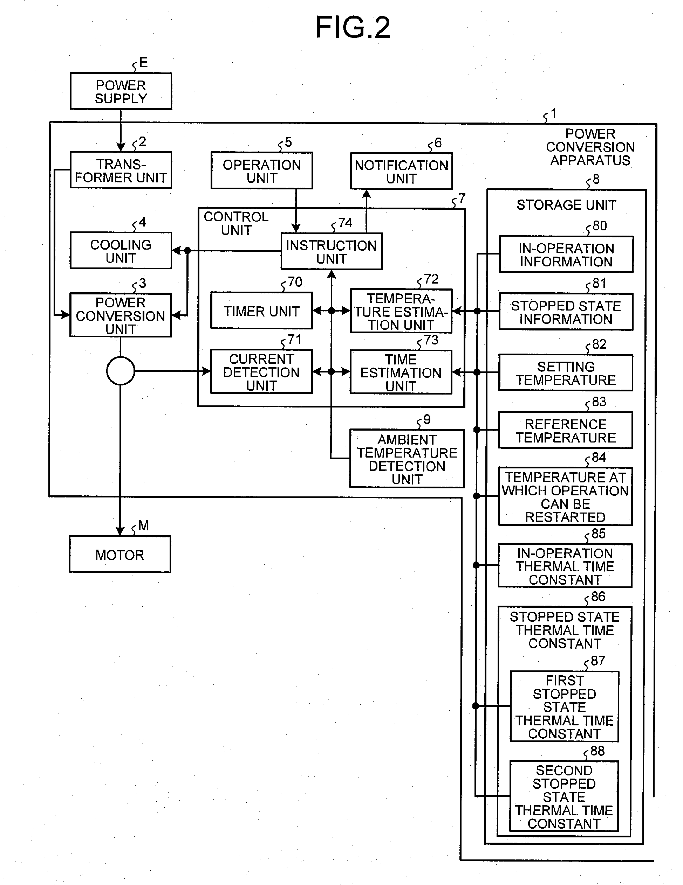

An example of the configuration of the power conversion apparatus will be described later with reference to FIG. 2, and the power conversion apparatus is provided with the transformer unit including a transformer whose capacity is smaller than the maximum capacity of a power converter in the power conversion unit. This can reduce the size and the cost of the power conversion apparatus as compared with other apparatuses including a transformer whose capacity is equal to the maximum capacity of a power converter.

In such a power conversion apparatus, for example, when the power conversion unit continues to operate with the maximum output for a long time, there is a concern that the temperature of a prescribed portion (for example, a portion made of resin) of the transformer unit reaches the rated temperature because the capacity of the transformer is smaller than the maximum capacity of the power converter.

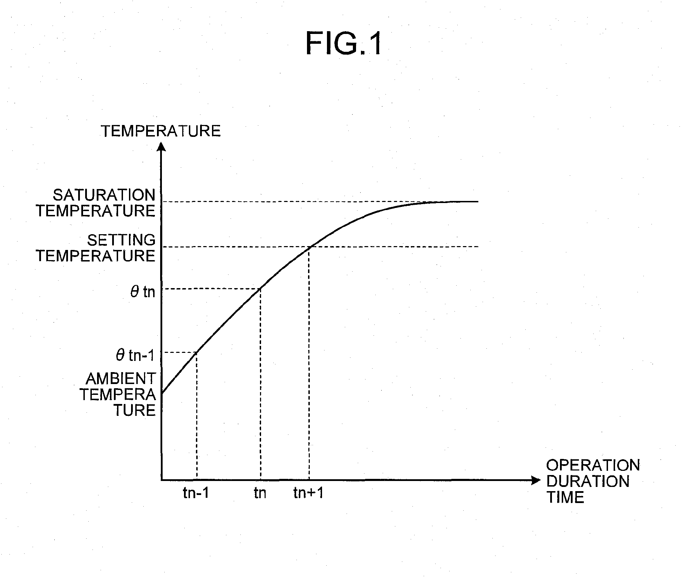

The power conversion apparatus, therefore, has a function capable of protecting,a prescribed portion, which has relatively low resistance to heat, of the transformer unit from heat. The following describes the outline of the function capable of protecting the transformer unit included in the power conversion apparatus from heat with reference to FIG. 1.

FIG. 1 is an explanatory view of the function capable of protecting the transformer unit included in the power conversion apparatus from heat. The horizontal axis illustrated in FIG. 1 represents an operation duration time of the power conversion unit, and the vertical axis represents the temperature of a prescribed portion of the transformer unit during operation of the power conversion unit (hereinafter referred to simply as "prescribed portion").

The graph illustrated in FIG. 1 illustrates a transition of the temperature of the prescribed portion along with an increase in the operation duration time of the power conversion unit (hereinafter referred to simply as "operation duration time"). FIG. 1 illustrates a graph when the current value of alternating current (AC) output from the power conversion apparatus to the load is constant as an example.

As illustrated in FIG. 1, the temperature of the prescribed portion at the start of operating the power conversion unit is equal to the ambient temperature of the power conversion apparatus. The temperature of the prescribed portion increases along with an increase in the operation duration time and then reaches a setting temperature corresponding to the rated temperature of the transformer unit. The temperature of the prescribed portion reaches, when the operation of the power conversion unit is further continued, a saturation temperature.

The rated temperature means an upper limit temperature for heat resistance of the prescribed portion. The setting temperature means a temperature capable of assuring reliability for heat resistance of the prescribed portion, and a predetermined temperature lower than the rated temperature by a prescribed temperature.

In the present embodiments, an approximate function of the graph illustrated in FIG. 1 is obtained in advance. More specifically, a power conversion apparatus for testing is used to perform a test for actually measuring the temperature of the prescribed portion of the transformer unit when the power conversion unit has already been operated. Based on the test results, the following expressions are obtained as the approximate function indicating a temperature transition of the prescribed portion during operation of the power conversion unit.

$$\text{Expression (1): } \theta tn = \theta t(n - 1) + (\theta sat1 - \theta t(n - 1))$$

$$\text{by } [1 - EXP(-(tn - t(n - 1))/\tau1)] - (\text{Reference temperature}$$

$$- \text{ Ambient temperature})$$

$$\text{Expression (2): } \theta sat1 = I \text{ by } I \text{ by } K1$$

$\theta tn$: Temperature of a prescribed portion at time tn (n: integer)
$\theta t(n - 1)$: Temperature of a prescribed portion at time t(n - 1) (n: integer)
$\theta sat1$: Saturation temperature
I: Current value of AC flowing depending on a load
K1: Factor during operation of the power conversion unit
$\tau1$: Thermal time constant during operation of the power conversion unit

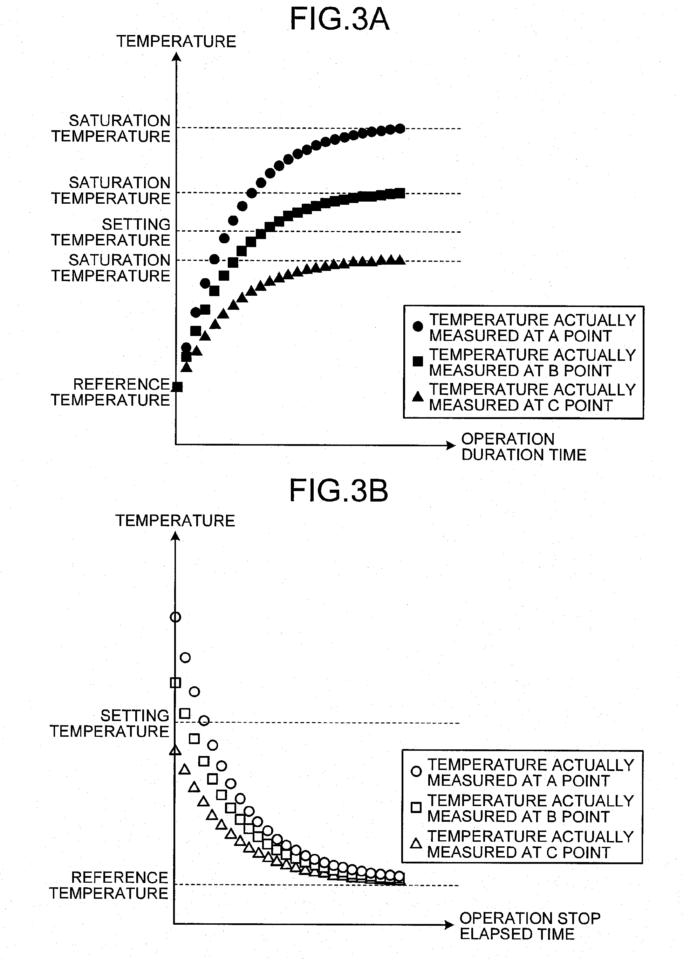

Reference temperature: Ambient temperature of the power conversion apparatus when a test was performed
Ambient temperature: Ambient temperature of a power conversion apparatus for products
I in Expression (2) represents, for example, a current value of AC flowing between the load and the power conversion unit, a current value of AC flowing between the power conversion unit and the transformer unit, or a current value of AC flowing between the power supply and the transformer unit. An example of the tests performed in advance in order to obtain Expressions (1) and (2) will be described later with reference to FIGS. 3A and 3B.

Expressions (1) and (2) are used to obtain the temperature of the present prescribed portion by substituting the present current value for I, an operation start time of the power conversion unit for t(n - 1), the present time for tn, and the reference temperature for $\theta t(n - 1)$.

Expressions (1) and (2) are also used to obtain the temperature of the prescribed portion at a desirable time by substituting the present current value for I, the present time for t(n - 1), a desirable time after the present time (in the future) for tn, and the temperature of the present prescribed portion for $\theta t(n - 1)$. In other words, the temperature $\theta tn$ of the prescribed portion at time tn can be obtained at time tn - 1 illustrated in FIG. 1.

When the current value is changed between the start of operating the power conversion unit and the present time, the saturation temperature ($\theta sat1$) is obtained by substituting the most-recently-changed current value for I in Expression (2). Then the temperature of the prescribed portion at a desirable time can be obtained by substituting the obtained saturation temperature for $\theta sat1$ in Expression (1). Thus, using Expressions (1) and (2) enable the temperature of the prescribed portion at a certain operation duration time to be estimated.

The power conversion apparatus stores Expressions (1) and (2), in other words, information indicating a correspondence relation between the temperature of the prescribed portion of the power conversion unit, the operation duration time of the power conversion unit, and a current value of AC depending on the load (hereinafter referred to as "in-operation information").

The power conversion apparatus estimates the temperature of the prescribed portion at a certain operation duration time based on the current value of AC flowing depending on the load and the in-operation information, and outputs an instruction for heat-resistance protection of the transformer unit based on the estimated temperature of the prescribed portion.

For example, the power conversion apparatus outputs instructions including an instruction for outputting information related to the necessity of cooling the transformer unit to a prescribed notification unit depending on the estimated temperature of the prescribed portion. This enables a user to take measures to cool the transformer unit before the temperature of the prescribed portion reaches the temperature estimated by the power conversion apparatus.

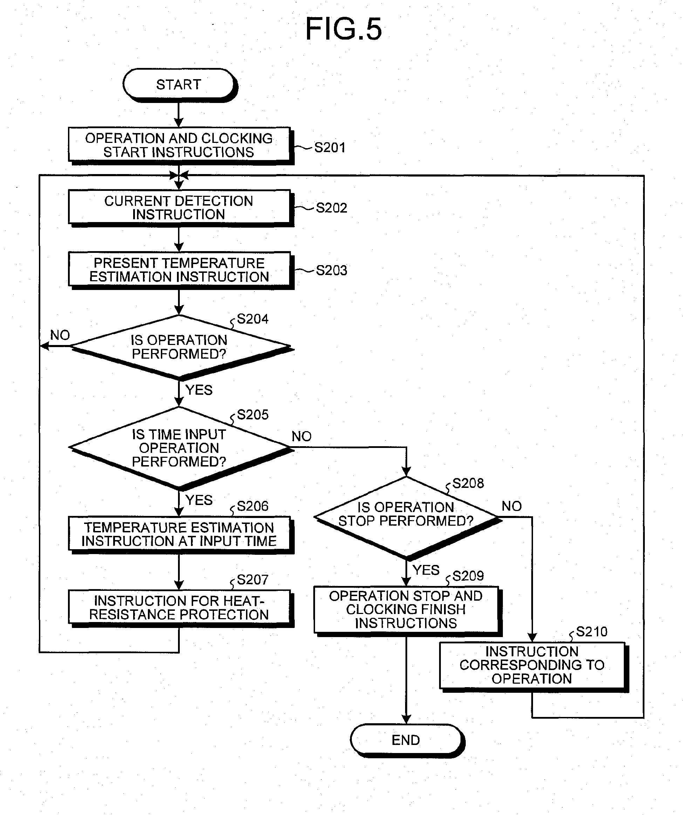

Accordingly, the power conversion apparatus can protect the transformer unit from heat. The power conversion apparatus estimates the temperature of the prescribed portion, and outputs a prescribed instruction for heat-resistance protection of the transformer unit. Such processing will be described later with reference to FIG. 5.

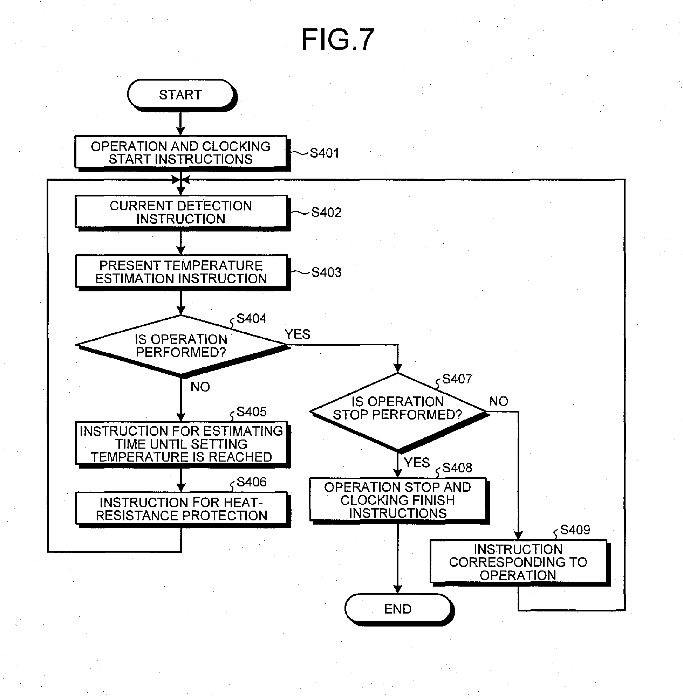

The power conversion apparatus estimates the time until the temperature of the prescribed portion reaches the setting temperature based on the estimated temperature of the prescribed portion, the above-mentioned setting temperature (see FIG. 1), and the in-operation information, and outputs an instruction for heat-resistance protection of the transformer unit depending on the estimated time. Such processing will be described later with reference to FIG. 7.

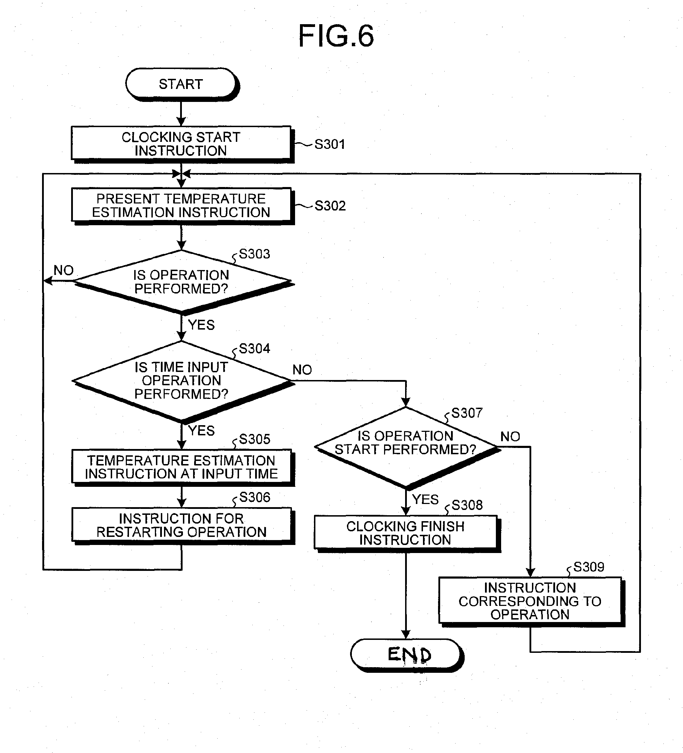

As for the time elapsed after the operation of the power conversion unit is stopped (hereinafter referred to as "operation stop elapsed time"), the power conversion apparatus estimates the temperature of the prescribed portion at a certain operation stop elapsed time. The power conversion apparatus then outputs an instruction for restarting the operation of the power conversion unit based on the estimated temperature of the prescribed portion. Such processing will be described later with reference to FIG. 6.

The following describes the configuration of the power conversion apparatus with reference to FIG. 2. FIG. 2 is a block diagram illustrating the configuration of a power conversion apparatus 1 in accordance with the embodiments. As illustrated in FIG. 2, the power conversion apparatus 1 converts power supplied from a power supply E into a prescribed alternating voltage (current) and outputs it to a motor M as a load.

The power conversion apparatus 1 is provided with a transformer unit 2, a power conversion unit 3, a cooling unit 4, an operation unit 5, a notification unit 6, a control unit 7, a storage unit 8, and an ambient temperature detection unit 9. The transformer unit 2 transforms power supplied from the power supply E through a transformer and outputs it to the power conversion unit 3. The transformer unit 2 is provided with the transformer whose capacity is smaller than the maximum capacity of a power converter in the power conversion unit 3.

The power conversion unit 3 converts the power transformed by the transformer unit 2 into a prescribed alternating voltage through the power converter and outputs it to the motor M so as to drive the motor M. The power converter included in the power conversion unit 3 is a serial multiple inverter in which the outputs of a single-phase inverter are connected to each other in series by a plurality of steps so as to form each phase of the three-phase inverter. The power conversion unit 3 operates, stops, changes output current, etc., based on the instruction input from the control unit 7.

The cooling unit 4 is a cooling fan for cooling the transformer unit 2. The cooling unit 4 operates and stops based on the instruction input from the control unit 7. The operation unit 5 is an operation unit that a user operates when operating the power conversion apparatus 1. The operation unit 5 outputs an operation signal corresponding to the operation of a user to the control unit 7.

The notification unit 6 is a display device for displaying various information related to the power conversion apparatus 1 such as an operation state of the power conversion apparatus 1. When a touch-panel-type display device allowing touch operation is used as the notification unit 6, the notification unit 6 also serves as the operation unit 5. The notification unit 6 displays various information based on the instruction input from the control unit 7. The ambient temperature detection unit 9 is a temperature sensor, and detects an ambient temperature of the power conversion apparatus 1 (hereinafter referred to as "ambient temperature") so as to output the detected result to the control unit 7.

The ambient temperature detection unit 9 is optional unless the temperature of the ambience where the power conversion apparatus 1 is installed drastically varies within the bounds of common sense. For example, when a variation range of the ambient temperature of the power conversion apparatus 1 is around the day temperature difference of the outside air temperature, the ambient temperature detection unit 9 may be omitted. In this case, the ambient temperature in the above-mentioned Expression (1) and the later-mentioned Expression (3) may be set to any desired predetermined temperature (for example, an average temperature of the varying ambient temperature).

The storage unit 8 is a storage device for storing therein various information that the control unit 7 uses in order to control the power conversion apparatus 1. The storage unit 8 stores therein in-operation information 80, stopped state information 81, a setting temperature 82, a reference temperature 83, a temperature at which operation can be restarted 84, an in-operation thermal time constant 85, and a stopped state thermal time constant 86. The stopped state thermal time constant 86 includes a first stopped state thermal time constant 87 and a second stopped state thermal time constant 88.

The information stored in the storage unit 8 is information defined or obtained based on the tests, which are preliminarily performed using a power conversion apparatus for testing before products are shipped. The following describes an example of the tests in accordance with the embodiments with reference to FIGS. 3A and 3B.

FIG. 3A is an explanatory view illustrating an example of actual measurement results for the temperature of the prescribed portions measured during operation of the power conversion unit in accordance with the embodiments. FIG. 3B is an explanatory view illustrating an example of actual measurement results for the temperature of the prescribed portions measured during a stop of the operation of the power conversion unit in accordance with the embodiments.

In the present embodiments, a power conversion apparatus for testing same as the power conversion apparatus 1 is used to perform a test on heat-resistance protection of the transformer unit. More specifically, the temperature of a plurality of prescribed portions of the transformer unit is measured when the power conversion unit is actually being operated. This can detect a temperature transition of each prescribed portion depending on the operation duration time of the power conversion unit.

For example, as illustrated in FIG. 3A, the prescribed temperature of three points, which are A point, B point, and C point, of the transformer unit is measured. As a consequence, the prescribed portion having the highest temperature in each operation duration time was considered as A point.

In such a case, if A point of the transformer unit can be protected from heat during operation of the power conversion unit, B point and C point, which have a lower temperature than that of A point, can be protected from heat. In the present embodiments, an approximate function representing a transition of the temperature measured at A point is obtained. The obtained approximate function corresponds to Expressions (1) and (2) mentioned above.

In the present embodiments, Expressions (1) and (2) are stored as the in-operation information 80 in the storage unit 8 of the power conversion apparatus 1 (see FIG. 2). In addition, τ1 in Expression (1) is stored as the in-operation thermal time constant 85 and separately from the in-operation information 80 in the storage unit 8 so that τ1 can be changed depending on the specifications of the power conversion apparatus 1 (see FIG. 2).

Moreover, a temperature capable of assuring reliability for heat resistance of the prescribed portion determined based on tests is stored as the setting temperature 82, and an ambient temperature of the power conversion apparatus at the time of testing is stored as the reference temperature 83 in the storage unit 8 (see FIG. 2).

In the embodiments, the temperature of the plurality of prescribed portions of the transformer unit is measured when the power conversion unit of the power conversion apparatus for testing was operated for a prescribed time and then is stopped. This can detect a temperature transition of each prescribed portion depending on the operation stop elapsed time of the power conversion unit.

For example, as illustrated in FIG. 3B, the prescribed temperature of three points, which are A point, B point, and C point, of the transformer unit is measured. As a consequence, the prescribed portion having the highest temperature in each operation duration time was considered as A point.

In such a case, if a temperature at A point of the transformer unit is lowered to a temperature capable of restarting the operation of the power conversion unit during a stop of the power conversion unit, the temperature of B point and C point, which have a lower temperature than that of A point, is definitely lowered to the temperature capable of restarting the operation of the power conversion unit. In the present embodiments, an approximate function representing a transition of the temperature measured at A point is obtained. Such an approximate function is represented by the following expression.

$$\text{Expression (3):} \ \theta t(n + 1) = (\theta tn + \theta sat2) \ \text{by} \ \text{EXP}(-(t(n + 1) - tn)/\tau 2) - (\text{Reference temperature} - \text{Ambient} \ \text{temperature})$$

θt(n + 1): Temperature of a prescribed portion at time t(n + 1) (n: integer)
θtn: Temperature of a prescribed portion at the time of stopping the operation of the power conversion unit at time tn
τ2: Thermal time constant during a stop of the power conversion unit
θsat2 = I by I by K2 by θt: Temperature for an after rise
I: Current value of AC having flowed depending on the load immediately before the power conversion unit stops
K2: Factor during a stop of the power conversion unit
θt: Temperature of the prescribed portion immediately before the power conversion unit stops

The after rise means a rise temperature of the prescribed portion for an amount in temperature having increased immediately after the operation of the power conversion unit 3 was stopped.

In the present embodiment, Expression (3) is stored as the stopped state information 81 in the storage unit 8 of the power conversion apparatus 1 (see FIG. 2). In addition, τ2 in Expression (3) is stored as the stopped state thermal time constant 86 and separately from the in-operation information 80 in the storage unit 8 so that τ2 can be changed depending on the specifications of the power conversion apparatus 1 (see FIG. 2).

The stopped state thermal time constant 86 includes the first stopped state thermal time constant 87, which is substituted in Expression (3) when the transformer unit 2 is cooled by the cooling unit 4, and the second stopped state thermal time constant 88, which is substituted in Expression (3) when the transformer unit 2 is not cooled by the cooling unit 4 (see FIG. 2).

In the power conversion apparatus 1, the operation duration time for causing the power conversion unit 3 to intermittently continue to operate may be set in advance. In the present embodiments, the temperature of the prescribed portion at the time of restarting the operation, which can cause the power conversion unit 3 to continue to operate without reaching the setting temperature 82 during the predetermined operation duration time, is stored as the temperature at which operation can be restarted 84 in the storage unit 8 (see FIG. 2).

Referring back to FIG. 2, the following describes the control unit 7 in the power conversion apparatus 1. The control unit 7 is a processing unit for collectively controlling operation of the whole power conversion apparatus 1, and is provided with a timer unit 70, a current detection unit 71, a temperature estimation unit 72, a time estimation unit 73, and an instruction unit 74.

The control unit 7 allows a user to select any one of the temperature estimation mode and the time estimation mode, and causes the power conversion apparatus 1 to operate in the selected mode. The time estimation mode is an operation mode for estimating the temperature of the prescribed portion at the time input by a user during operation or a stop of the power conversion unit 3. The time estimation mode is an operation mode for estimating a time until the temperature of the prescribed portion reaches the setting temperature 82 during operation of the power conversion unit 3 and estimating a time until the temperature of the prescribed portion reaches a temperature at which operation of the power conversion unit 3 can be restarted during a stop of the power conversion unit 3.

The timer unit 70 is a processing unit for clocking the operation duration time from when operation of the power conversion unit 3 is started until when the operation is stopped, and the operation stop elapsed time from when the operation of the power conversion unit 3 is stopped until when the operation is restarted based on the instruction input from the instruction unit 74. The timer unit 70 outputs the clocked operation duration time and the operation stop elapsed time to the temperature estimation unit 72 and the time estimation unit 73.

The current detection unit 71 is a processing unit for detecting a current value of AC flowing depending on the load based on the instruction input from the instruction unit 74. The current detection unit 71 outputs the detected current value to the temperature estimation unit 72 and the time estimation unit 73.

In the example illustrated in FIG. 2, the current detection unit 71 detects the current value of AC flowing between the motor M as a load and the power conversion unit 3, but may detect a current value of other AC flowing depending on the load. For example, the current detection unit 71 may detect a current value of AC flowing between the power conversion unit 3 and the transformer unit 2 or a current value of AC flowing between the power supply E and the transformer unit 2.

The temperature estimation unit 72 is a processing unit for estimating the temperature of the prescribed unit at a certain operation duration time based on the current value detected by the current detection unit 71 (hereinafter referred to simply as "current value") and the in-operation information 80.

When a user has operated the operation unit 5 so as to input a desirable time during operation of the power conversion apparatus 1, the temperature estimation unit 72 receives an instruction for estimating the temperature of the prescribed portion at the time input by the user from the instruction unit 74.

When receiving the instruction for estimating a temperature during operation of the power conversion unit 3, the temperature estimation unit 72 substitutes the present current value for I in Expression (2), and obtains $\theta$sat1 so as to substitute it in Expression (1). Moreover, the temperature estimation unit 72 substitutes the temperature of the present prescribed portion for $\theta$t(n - 1) in Expression (1) where the reference temperature 83 and the ambient temperature are substituted, substitutes the time input by the user for tn, substitutes the present time for t(n - 1), and substitutes the in-operation thermal time constant 85 for $\tau$1.

The temperature estimation unit 72 performs arithmetic processing to solve Expression (1) for $\theta$tn so as to estimate the temperature of the prescribed portion at a certain time input by the user. The temperature estimation unit 72 outputs the estimated temperature of the prescribed portion to the instruction unit 74.

When the operation to change the current value has been performed from the start of operating the power conversion unit 3 to the present time, the temperature estimation unit 72 substitutes the most-recently-changed current value instead of the present current value in Expression (2) so as to obtain $\theta$sat1.

When a user has operated the operation unit 5 so as to input a desirable time during a stop of the power conversion apparatus 1, the temperature estimation unit 72 receives an instruction for estimating the temperature of the prescribed portion at the time input by the user from the instruction unit 74.

When receiving the instruction for estimating a temperature during a stop of the power conversion unit 3, the temperature estimation unit 72 substitutes the temperature of the prescribed portion at the time of stopping the operation of the power conversion unit 3 for $\theta$tn in Expression (3) where the reference temperature 83 and the ambient temperature are substituted.

The temperature estimation unit 72 substitutes the current value at the time of stopping the operation of the power conversion unit 3 for I in Expression (3), substitutes the time input by the user for t(n + 1), substitutes the present time for tn, and substitutes the stopped state thermal time constant 86 for $\tau$2.

In this case, the temperature estimation unit 72 substitutes the first stopped state thermal time constant 87 as the stopped state thermal time constant 86 when the transformer unit 2 is being cooled by the cooling unit 4, and substitutes the second stopped state thermal time constant 88 as the stopped state thermal time constant 86 when the transformer unit 2 is not being cooled by the cooling unit 4.

The temperature estimation unit 72 performs arithmetic processing to solve Expression (3) for $\theta$t(n + 1) so as to estimate the temperature of the prescribed portion at a certain time input by the user. The temperature estimation unit 72 outputs the estimated temperature of the prescribed portion to the instruction unit 74.

In this manner, the temperature estimation unit 72 properly uses the thermal time constant depending on a case where the power conversion unit 3 is in operation, a case where the power conversion unit 3 is in a stopped state of the operation, a case where the transformer unit 2 is being cooled by the cooling unit 4, and a case where the transformer unit 2 is not being cooled by the cooling unit 4. This enables the temperature estimation unit 72 to more accurately estimate the temperature of the prescribed portion.

The time estimation unit 73 is a processing unit for estimating the time until the temperature of the prescribed portion reaches the setting temperature 82 based on the temperature of the prescribed portion estimated by the temperature estimation unit 72, the setting temperature 82, and the in-operation information 80.

The time estimation unit 73 estimates the time until the temperature of the prescribed portion reaches the setting temperature based on the instruction input from the instruction unit 74 during operation of the power conversion unit 3. The time estimation unit 73 substitutes the present current value for I in Expression (2), and obtains θsat1 so as to substitute it in Expression (1).

Moreover, the time estimation unit 73 substitutes the temperature of the present prescribed portion for θt(n - 1) in Expression (1) where the reference temperature 83 and the ambient temperature are substituted, substitutes the present time for t(n - 1), and substitutes the in-operation thermal time constant 85 for τ1.

The time estimation unit 73 performs arithmetic processing to solve Expression (1) for tn - t(n - 1) so as to estimate the time until the temperature of the prescribed portion reaches the setting temperature 82. The time estimation unit 73 sequentially repeats the arithmetic processing and sequentially outputs the estimated temperature of the prescribed portion to the instruction unit 74.

When the operation to change the current value has been performed from the start of operating of the power conversion unit 3 to the present time, the time estimation unit 73 substitutes the most-recently-changed current value instead of the present current value in Expression (2) so as to obtain θsat1.

The time estimation unit 73 estimates the time until the temperature of the prescribed portion reaches the temperature at which operation can be restarted 84 based on the instruction input from the instruction unit 74 during a stop of the power conversion unit 3. More specifically, the time estimation unit 73 substitutes the temperature at which operation can be restarted 84 for θt(n + 1) in Expression (3) where the reference temperature 83 and the ambient temperature are substituted, substitutes the temperature of the present prescribed portion for θtn, substitutes the present time for tn, and substitutes the stopped state thermal time constant 86 for τ2.

The time estimation unit 73 performs arithmetic processing to solve Expression (3) for tn - t(n - 1) so as to estimate the time until the temperature of the prescribed portion reaches the temperature at which operation can be restarted 84. The time estimation unit 73 sequentially repeats the arithmetic processing and sequentially outputs the estimated temperature of the prescribed portion to the instruction unit 74.

In this case, the time estimation unit 73 substitutes the first stopped state thermal time constant 87 as the stopped state thermal time constant 86 when the transformer unit 2 is being cooled by the cooling unit 4, and substitutes the second stopped state thermal time constant 88 as the stopped state thermal time constant 86 when the transformer unit 2 is not being cooled by the cooling unit 4.

In this manner, the time estimation unit 73 properly uses the thermal time constant depending on a case where the power conversion unit 3 is in operation, a case where the power conversion unit 3 is in a stopped state of the operation, a case where the transformer unit 2 is being cooled by the cooling unit 4, and a case where the transformer unit 2 is not being cooled by the cooling unit 4. This enables the time estimation unit 73 to more accurately estimate the time until the temperature of the prescribed portion reaches the temperature at which operation can be restarted 84.

The instruction unit 74 is a processing unit for outputting prescribed instructions for heat-resistance protection of the transformer unit 2 to the timer unit 70, the current detection unit 71, the temperature estimation unit 72, the time estimation unit 73, the cooling unit 4, and the power conversion unit 3 based on an operation signal input from the operation unit 5 during operation of the power conversion unit 3.

The instruction unit 74 also outputs instructions for restarting the operation of the power conversion unit 3 to the timer unit 70, the current detection unit 71, the temperature estimation unit 72, the time estimation unit 73, the cooling unit 4, and the power conversion unit 3 during a stop of the power conversion unit 3.

In other words, the instruction unit 74 outputs prescribed instructions so as to give instructions on the operation for heat-resistance protection of the transformer unit 2 and the operation for restarting the power conversion unit 3 to the timer unit 70, the current detection unit 71, the temperature estimation unit 72, the time estimation unit 73, the cooling unit 4, and the power conversion unit 3.

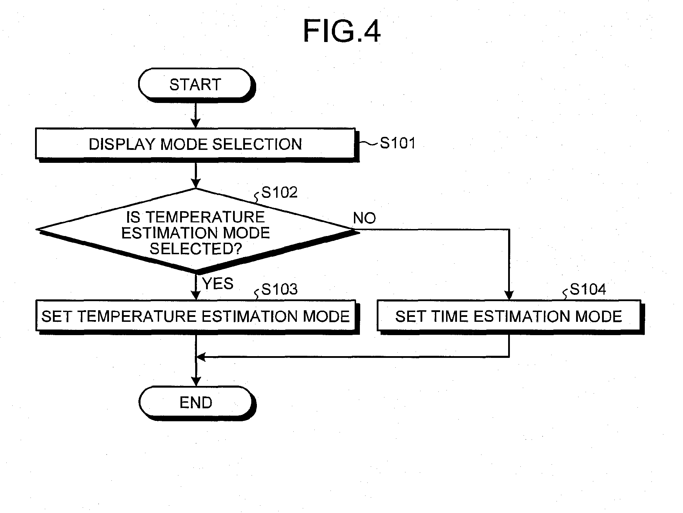

The following describes the processing executed by the instruction unit 74 in accordance with the embodiments with reference to FIGS. 4 to 8. FIGS. 4 to 8 are flowcharts illustrating processing executed by the instruction unit 74 in accordance with the embodiments.

As illustrated in FIG. 4, if the control unit 7 is started, the instruction unit 74 displays a mode selection display on a display screen of the notification unit 6 (Step S101). The notification unit 6 displays the mode selection display for allowing a user to select any one of the temperature estimation mode and the time estimation mode.

Subsequently, the instruction unit 74 determines whether the temperature estimation mode was selected based on the operation of the operation unit 5 by the user (Step S102). If the instruction unit 74 has determined that the temperature estimation mode was selected (Yes at Step S102), the instruction unit 74 sets the temperature estimation mode (Step S103) and ends the processing. In this case, for example, the instruction unit 74 stores a flag (not illustrated) indicating that the temperature estimation mode was selected in a prescribed area of the storage unit 8 so as to set the temperature estimation mode.

If the temperature estimation mode was not selected by a user (No at Step S102), in other words, if the time estimation mode was selected, the instruction unit 74 sets the time estimation mode (Step S104) and ends the processing.

In this case, for example, the instruction unit 74 stores a flag (not illustrated) indicating that the time estimation mode was selected in a prescribed area of the storage unit 8 so as to set the time estimation mode.

If the operation for starting the operation of the power conversion unit 3 has been performed by the user after that, the instruction unit 74 refers to the flag stored in the prescribed area of the storage unit 8 and performs processing of the mode corresponding to the flag.

In other words, if the flag indicating that the temperature estimation mode was selected is stored in the storage unit 8, the instruction unit 74 executes processing illustrated in FIG. 5 so as to cause the power conversion apparatus 1 to operate in the temperature estimation mode. If the flag indicating that the time estimation mode was selected is stored in the storage unit 8, the instruction unit 74 executes processing illustrated in FIG. 7 so as to cause the power conversion apparatus 1 to operate in the time estimation mode.

More specifically, if the operation for starting the operation has been performed by a user with the temperature estimation mode selected, the instruction unit 74 gives operation and clocking start instructions as illustrated in FIG. 5 (Step S201). In other words, the instruction unit 74 instructs the power conversion unit 3 to start the operation, and instructs the timer unit 70 to start clocking time. This allows the power conversion unit 3 to start the operation and the timer unit 70 to start clocking the operation duration time of the power conversion unit 3.

Subsequently, the instruction unit 74 instructs the current detection unit 71 to detect current (Step S202). This allows the current detection unit 71 to detect the current value of AC output from the power conversion unit 3 to the motor M and output it to the temperature estimation unit 72. Then the instruction unit 74 instructs the temperature estimation unit 72 to estimate the present temperature (Step S203). This allows the temperature estimation unit 72 to estimate the temperature of the present prescribed portion of the power conversion unit 3.

Subsequently, the instruction unit 74 determines whether the operation unit 5 was operated (Step S204). If the instruction unit 74 has determined that the operation unit 5 was operated (Yes at Step S204), the process moves to Step S205. If not (No at Step S204), the instruction unit 74 performs the processing at Step S202.

The instruction unit 74 determines whether the operation of the operation unit 5 was the time input operation at Step S205. If the instruction unit 74 has determined that the operation of the operation unit 5 was the time input operation (Yes at Step S205), the process moves to Step S206. If not (No at Step S205), the instruction unit 74 performs the processing at Step S208.

The instruction unit 74 instructs the temperature estimation unit 72 to estimate a temperature at the input time at Step S206. This allows the temperature estimation unit 72 to estimate the temperature of the prescribed portion of the power conversion unit 3 at the input time input by the time input operation and output it to the instruction unit 74.

Subsequently, the instruction unit 74 gives an instruction for heat-resistance protection based on the temperature of the prescribed portion of the power conversion unit 3 at the input time estimated by the temperature estimation unit 72 (Step S207). More specifically, the temperature of the prescribed portion at the input time estimated by the temperature estimation unit 72 was considered to be the setting temperature 82 or higher.

In such a case, in order to continue the operation of the power conversion unit 3 until the input time, for example, the instruction unit 74 outputs to the notification unit 6 an instruction for displaying a notification image, which indicates that the cooling unit 4 needs to be operated ahead of the input time by a prescribed period of time so as to cool the transformer unit 2.

This enables a user to operate the cooling unit 4 ahead of the input time by a prescribed period of time and cool the transformer unit 2 referring to the notification image when the operation of the power conversion unit 3 is continued until the input time. Thus, the power conversion apparatus 1 can protect the transformer unit 2 from heat even if the capacity of the transformer in the transformer unit 2 is smaller than the maximum capacity of the power converter in the power conversion unit 3.

When the temperature of the prescribed portion at the input time was lower than the setting temperature 82, the instruction unit 74, for example, outputs to the notification unit 6 an instruction for displaying a notification image, which indicates that the power conversion unit 3 can continue to operate from the present time to the input time with reliability assured. Then the instruction unit 74 performs the processing at Step S202.

The instruction unit 74 determines whether the operation of the operation unit 5 was the operation for stopping the operation of the power conversion unit 3. If the instruction unit 74 has determined that the operation of the operation unit 5 was the operation for stopping the operation (Yes at Step S208), the instruction unit 74 gives operation stop and clocking finish instructions (Step S209) and ends the processing.

In other words, the instruction unit 74 instructs the power conversion unit 3 to stop the operation and the timer unit 70 to finish clocking time. This allows the power conversion unit 3 to stop the operation and the timer unit 70 to finish clocking the operation duration time so as to reset the clocking time. Then, the instruction unit 74 starts processing, which is executed during a stop of the operation of the power conversion unit 3. Such processing will be described later with reference to FIG. 6.

If the instruction unit 74 has determined that the operation of the operation unit 5 was not the operation for stopping the operation of the power conversion unit 3 at Step S208 (No at Step S208), the instruction unit 74 gives an instruction corresponding to the operation of the operation unit 5 (Step S210) and the process moves to Step S202.

For example, when the operation for increasing/decreasing output current of the power conversion unit 3 has been performed, the instruction unit 74 outputs an instruction for outputting the output current selected by a user to the power conversion unit 3. When the operation for starting or stopping the cooling unit 4 has been performed, the instruction unit 74 outputs a start instruction or a stop instruction to the cooling unit 4.

The following describes the processing executed by the instruction unit 74 in the temperature estimation mode during a stop of the operation of the power conversion unit 3 with reference to FIG. 6. When the operation of the power conversion unit 3 is stopped, the instruction unit 74 instructs the timer unit 70 to start clocking time (Step S301) as illustrated in FIG. 6. This allows the timer unit 70 to start clocking the operation stop elapsed time, which is the time elapsed from when the operation of the power conversion unit 3 was stopped.

Subsequently, the instruction unit 74 instructs the temperature estimation unit 72 to estimate the present temperature (Step S302). This allows the temperature estimation unit 72 to estimate the temperature of the present prescribed portion of the power conversion unit 3.

Subsequently, the instruction unit 74 determines whether the operation unit 5 was operated (Step S303). If the instruction unit 74 has determined that the operation unit 5 was not operated (No at Step S303), the process moves to Step S302. If the instruction unit 74 has determined that the operation unit 5 was operated (Yes at Step S303), the instruction unit 74 determines whether the operation of the operation unit 5 was the time input operation (Step S304).

If the instruction unit 74 has determined that the operation of the operation unit 5 was the time input operation (Yes at Step S304), the process moves to Step S305. If not (No at Step S304), the instruction unit 74 performs the processing at Step S307.

The instruction unit 74 instructs the temperature estimation unit 72 to estimate a temperature at the input time at Step S305. This allows the temperature estimation unit 72 to estimate the temperature of the prescribed portion of the power conversion unit 3 at the input time input by the time input operation and output it to the instruction unit 74.

Subsequently, the instruction unit 74 gives an instruction for restarting the operation of the power conversion unit 3 based on the temperature of the prescribed portion of the power conversion unit 3 at the input time estimated by the temperature estimation unit 72 (Step S306). More specifically, the temperature of the prescribed portion at the input time was considered to be higher than the temperature at which operation can be restarted 84.

In such a case, in order to restart the operation of the power conversion unit 3 at the input time, for example, the instruction unit 74 outputs to the notification unit 6 an instruction for displaying a notification image, which indicates that the cooling unit 4 needs to be operated ahead of the input time by a prescribed period of time so as to cool the power conversion unit 3.

This enables the user to restart the operation of the power conversion unit 3 after operating the cooling unit 4 ahead of the input time by a prescribed period of time and cooling the transformer unit 2 referring to the notification image. Thus, the power conversion apparatus 1 can protect the transformer unit 2 from heat even if the capacity of the transformer in the transformer unit 2 is smaller than the maximum capacity of the power converter in the power conversion unit 3.

When the temperature of the prescribed portion at the input time was the temperature at which operation can be restarted 84 or lower, the instruction unit 74, for example, outputs to the notification unit 6 an instruction for displaying a notification image, which indicates that the power conversion unit 3 can restart the operation with reliability assured at the input time. Then the instruction unit 74 performs the processing at Step S302.

The instruction unit 74 determines whether the operation of the operation unit 5 was the operation for starting the operation of the power conversion unit 3 at Step S307. If the instruction unit 74 has determined that the operation of the operation unit 5 was the operation for starting the operation (Yes at Step S307), the instruction unit 74 instructs the timer unit 70 to finish clocking time (Step S308) and ends the processing. This allows the timer unit 70 to finish clocking the operation stop elapsed time so as to reset the clocking time. Then, the instruction unit 74 starts the processing from Step S201 illustrated in FIG. 5.

If the instruction unit 74 has determined that the operation of the operation unit 5 was not the operation for starting the operation of the power conversion unit 3 at Step S307 (No at Step S307), the instruction unit 74 gives an instruction corresponding to the operation of the operation unit 5 (Step S309) and the process moves to Step S302. The processing at Step S309 is the same as that of Step S210 illustrated in FIG. 5, and thus description thereof will be omitted.

The following describes the processing executed by the instruction unit 74 when the operation for starting the operation has been performed by a user with the time estimation mode selected with reference to FIG. 7. The instruction unit 74 gives operation and clocking start instructions (Step S401) as illustrated in FIG. 7. In other words, the instruction unit 74 instructs the power conversion unit 3 to start the operation and the timer unit 70 to start clocking the operation duration time of the power conversion unit 3. This allows the power conversion unit 3 to start the operation and the timer unit 70 to start clocking the operation duration time of the power conversion unit 3.

Subsequently, the instruction unit 74 instructs the current detection unit 71 to detect current (Step S402). This allows the current detection unit 71 to detect the current value of AC output from the power conversion unit 3 to the motor M and output it to the temperature estimation unit 72.

Subsequently, the instruction unit 74 instructs the temperature estimation unit 72 to estimate the present temperature (Step S403). This allows the temperature estimation unit 72 to estimate the temperature of the present prescribed portion of the power conversion unit 3 and output it to the time estimation unit 73.

Subsequently, the instruction unit 74 determines whether the operation unit 5 was operated (Step S404). If the instruction unit 74 has determined that the operation unit 5 was not operated (No at Step S404), the process moves to Step S405. If the instruction unit 74 has determined that the operation unit 5 was operated (Yes at Step S404), the instruction unit 74 performs the processing at Step S407.

The instruction unit 74 instructs the time estimation unit 73 to estimate the time until when the temperature of the prescribed portion of the power conversion unit 3 reaches the setting temperature 82 at Step S405. This allows the time estimation unit 73 to estimate the time until when the temperature of the prescribed portion of the power conversion unit 3 reaches the setting temperature 82 and output it to the instruction unit 74.

Subsequently, the instruction unit 74 gives an instruction for heat-resistance protection based on the time estimated by the time estimation unit 73, in other words, the time until when the temperature of the prescribed portion of the power conversion unit 3 reaches the setting temperature 82 (Step S406).

More specifically, the instruction unit 74 instructs the notification unit 6 to display the time estimated by the time estimation unit 73 as the remaining time available for continuously operating the power conversion unit 3 with reliability maintained. Then, the instruction unit 74 performs the processing at Step S402.

This enables the notification unit 6 to sequentially display the remaining time available for continuously operating the power conversion unit 3 with reliability maintained by a countdown system when the operation unit 5 is not operated during operation of the power conversion unit 3. Therefore, a user can cool the transformer unit 2 at appropriate timing capable of protecting the transformer unit 2 from heat with reference to the display of the countdown system.

The instruction for heat-resistance protection given by the instruction unit 74 is not limited to this. For example, when the time estimated by the time estimation unit 73 has become shorter than the predetermined prescribed time, the instruction 74 may output a start instruction to the cooling unit 4 or output an instruction for stopping the operation or an instruction for decreasing operation speed to the power conversion unit 3 as instructions for heat-resistance protection. Such a configuration enables the power conversion apparatus 1 to automatically protect the transformer unit 2 from heat during the operation of the power conversion unit 3.

The instruction unit 74 determines whether the operation of the operation unit 5 was the operation for stopping the operation of the power conversion unit 3 at Step S407. If the instruction unit 74 has determined that the operation of the operation unit 5 was the operation for stopping the operation (Yes at Step S407), the instruction unit 74 gives operation stop and clocking finish instructions (Step S408) and ends the processing.

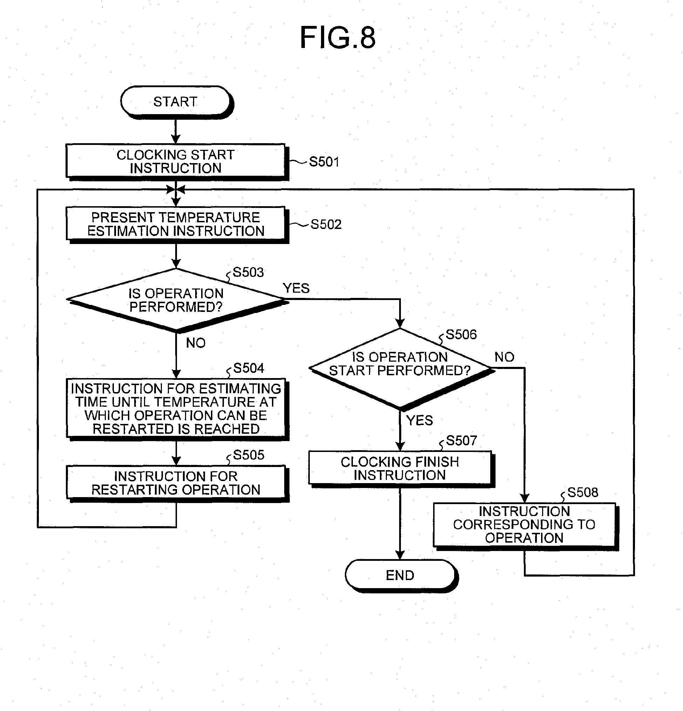

In other words, the instruction unit 74 instructs the power conversion unit 3 to stop the operation, and the timer unit 70 to finish clocking time so as to end the processing. This allows the power conversion unit 3 to stop the operation and the timer unit 70 to finish clocking the operation duration time so as to reset the clocking time. Then, the instruction unit 74 starts processing, which is executed during a stop of the operation of the power conversion unit 3. Such processing will be described later with reference to FIG. 8.

If the instruction unit 74 has determined that the operation of the operation unit 5 was not the operation for stopping the operation of the power conversion unit 3 at Step S407 (No at Step S407), the instruction unit 74 gives an instruction corresponding to the operation of the operation unit 5 (Step S409) and the process moves to Step S402. The processing at Step S409 is the same as that of Step S210 illustrated in FIG. 5, and thus description thereof will be omitted.

The following describes the processing executed by the instruction unit 74 in the time estimation mode during a stop of the operation of the power conversion unit 3 with reference to FIG. 8. When the operation of the power conversion unit 3 is stopped, the instruction unit 74 instructs the timer unit 70 to start clocking time (Step S501) as illustrated in FIG. 8. This allows the timer unit 70 to start clocking the operation stop elapsed time.

Subsequently, the instruction unit 74 instructs the temperature estimation unit 72 to estimate the present temperature (Step S502). This allows the temperature estimation unit 72 to estimate the temperature of the present prescribed portion of the power conversion unit 3 and output it to the time estimation unit 73.

Subsequently, the instruction unit 74 determines whether the operation unit 5 was operated (Step S503). If the instruction unit 74 has determined that the operation unit 5 was not operated (No at Step S503), the process moves to Step S504. If the instruction unit 74 has determined that the operation unit 5 was operated (Yes at Step S503), the process moves to Step S506.

The instruction unit 74 instructs the time estimation unit 73 to estimate the time until when the temperature of the prescribed portion of the power conversion unit 3 reaches the temperature at which operation can be restarted 84 at Step S504. This allows the time estimation unit 73 to estimate the time until when the temperature of the prescribed portion of the power conversion unit 3 reaches the temperature at which operation can be restarted and output it to the instruction unit 74.

Subsequently, the instruction unit 74 gives an instruction for restarting the operation of the power conversion unit 3 based on the time estimated by the time estimation unit 73, in other words, the time until when the temperature of the prescribed portion of the power conversion unit 3 reaches the temperature at which operation can be restarted 84 (Step S505).

More specifically, the instruction unit 74 instructs the notification unit 6 to display the time estimated by the time estimation unit 73 as the remaining time to the time available for restarting the operation of the power conversion unit 3 with reliability maintained. Then, the instruction unit 74 performs the processing at Step S502.

This enables the notification unit 6 to sequentially display the remaining time to the time available for restarting the operation of the power conversion unit 3 with reliability maintained by a countdown system when the operation unit 5 is not operated during a stop of the operation of the power conversion unit 3. Therefore, a user can restart the operation of the power conversion unit 3 at appropriate timing capable of protecting the transformer unit 2 from heat with reference to the display of the countdown system.

When the temperature of the prescribed portion has reached the temperature at which operation can be restarted 84, the instruction unit 74 may automatically output an instruction for restarting the operation of the power conversion unit 3. For example, when the power conversion apparatus 1 sequentially starts a plurality of motors Ms, the instruction unit 74 may sequentially switch the motor M to be started at a point where the temperature of the prescribed portion reaches the temperature at which operation can be restarted 84, start the power conversion unit 3, and start the next motor M.

The instruction unit 74 determines whether the operation of the operation unit 5 was the operation for starting the operation of the power conversion unit 3 at Step S506. If the instruction unit 74 has determined that the operation of the operation unit 5 was the operation for starting the operation (Yes at Step S506), the instruction unit 74 instructs the timer unit 70 to finish clocking time (Step S507) so as to end the processing.

This allows the timer unit 70 to finish clocking the operation stop elapsed time and reset the clocking time. Then, the instruction unit 74 starts the processing from Step S401 illustrated in FIG. 7.

If the instruction unit 74 has determined that the operation of the operation unit 5 was not the operation for starting the operation of the power conversion unit 3 at Step S506 (No at Step S506), the instruction unit 74 gives an instruction corresponding to the operation of the operation unit 5 (Step S508) and the process moves to Step S502. The processing at Step S508 is the same as that of Step S210 illustrated in FIG. 5, and thus description thereof will be omitted.

As described above, the power conversion apparatus 1 stores in the storage unit 8 the in-operation information 80 indicating a correspondence relation between the temperature of the prescribed portion of the transformer unit 2 measured in advance, the operation duration time of the power conversion unit 3, and the current value detected by the current detection unit 71.

The power conversion apparatus 1 allows the temperature estimation unit 72 to estimate the temperature of the prescribed portion at a certain operation duration time based on the current value detected by the current detection unit 71 and the in-operation information 80. The power conversion apparatus 1 allows the instruction unit 74 to output a prescribed instruction for heat-resistance protection of the transformer unit 2 based on the temperature of the prescribed portion at a certain estimated operation duration time.

Thus, the power conversion apparatus 1 can protect the transformer unit 2 from heat even if the capacity of the transformer in the transformer unit 2 is smaller than the maximum capacity of the power converter in the power conversion unit 3.

When the current detection unit 71 detects the current value of AC flowing between the power conversion unit 3 and the transformer unit 2 or the current value of AC flowing the power supply E and the transformer unit 2, the power conversion apparatus 1 can protect the transformer unit 2 from heat similarly.

Expressions (1) and (2) in the above-mentioned embodiments are merely examples of the in-operation information 80, and Expression (3) is merely an example of the stopped state information 81. In other words, the in-operation information 80 can be any expression as long as it is an approximate function capable of reproducing the temperature transition of a prescribed portion illustrated in FIG. 3A, whereas the stopped state information 81 can be any expression as long as it is an approximate function capable of reproducing the temperature transition of a prescribed portion illustrated in FIG. 3B.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

Reference Signs List

1 POWER CONVERSION APPARATUS

2 TRANSFORMER UNIT

3 POWER CONVERSION UNIT

4 COOLING UNIT

5 OPERATION UNIT

6 NOTIFICATION UNIT

7 CONTROL UNIT

70 TIMER UNIT

71 CURRENT DETECTION UNIT

72 TEMPERATURE ESTIMATION UNIT

73 TIME ESTIMATION UNIT

74 INSTRUCTION UNIT

8 STORAGE UNIT

9 AMBIENT TEMPERATURE DETCTION UNIT

E POWER SUPPLY

M MOTOR

**Claims**

1. A power conversion apparatus comprising:

   a transformer unit configured to transform power supplied from a power supply;
   a power conversion unit configured to convert the power transformed by the transformer unit into a prescribed alternating voltage and output the converted power to a load;
   a current detection unit configured to detect a current value of alternating current (AC) that flows depending on the load;
   a timer unit configured to clock an operation duration time of the power conversion unit;
   a storage unit configured to store therein in-operation information that indicates a correspondence relation between a temperature of a prescribed portion of the transformer unit measured in advance, the operation duration time, and the current value;
   a temperature estimation unit configured to estimate a temperature of the prescribed unit at a certain operation duration time based on the current value detected by the current detection unit and the in-operation information; and
   an instruction unit configured to output prescribed instructions for heat-resistance protection of the transformer unit based on the temperature of the prescribed portion at the certain operation duration time estimated by the temperature estimation unit.

2. The power conversion apparatus according to claim 1, further comprising:

   a time estimation unit configured to estimate a time until the temperature of the prescribed portion reaches a setting temperature corresponding to a rated temperature of the transformer unit based on the temperature of the prescribed portion estimated by the temperature estimation unit, the setting temperature, and the in-operation information, wherein
   the storage unit stores therein the setting temperature used when the time estimation unit estimates the time.

**3.** The power conversion apparatus according to claim 1 or 2, wherein
the timer unit clocks an operation stop elapsed time from when operation of the power conversion unit is stopped,
the storage unit stores therein stopped state information indicating a correspondence relation between the temperature of the prescribed portion of the transformer unit measured in advance, the operation stop elapsed time, and the current value,
the temperature estimation unit estimates a temperature of the prescribed portion at a certain operation stop elapsed time based on the current value detected by the current detection unit and the stopped state information, and
the instruction unit outputs prescribed instructions for restarting the operation of the power conversion unit based on the temperature of the prescribed portion at the certain operation stop elapsed time estimated by the temperature estimation unit.

**4.** The power conversion apparatus according to claim 3, wherein
the storage unit stores therein an in-operation thermal time constant for an increase in temperature of the transformer unit during the operation of the power conversion unit, and a stopped state thermal time constant for a decrease in temperature of the transformer unit during a stop of the power conversion unit, and
the temperature estimation unit estimates a temperature of the prescribed portion at a certain operation duration time based on the in-operation thermal time constant, and estimates a temperature of the prescribed portion at the certain operation stop elapsed time based on the stopped state thermal time constant.

**5.** The power conversion apparatus according to claim 4, wherein
the storage unit stores therein, as the stopped state thermal time constant, a first stopped state thermal time constant for a decrease in temperature of the transformer unit when the transformer unit is cooled by a cooling fan and a second stopped state thermal time constant for a decrease in temperature of the transformer unit when the transformer unit is not cooled by the cooling fan, and
the temperature estimation unit estimates a temperature of the prescribed portion at the certain operation stop elapsed time based on the stopped state thermal time constant depending on whether the transformer unit is cooled by the cooling fan out of the first stopped state thermal time constant and the second stopped state thermal time constant.

**6.** The power conversion apparatus according to any one of claims 1 to 5, wherein the current detection unit detects a current value of AC flowing between the load and the power conversion unit.

**7.** The power conversion apparatus according to any one of claims 1 to 5, wherein the current detection unit detects a current value of AC flowing between the power conversion unit and the transformer unit.

**8.** The power conversion apparatus according to any one of claims 1 to 5, wherein the current detection unit detects a current value of AC flowing between the power supply and the transformer unit.

**9.** A method of protecting a transformer unit, the method comprising:

by a transformer unit, transforming power supplied from a power supply;
by a power conversion unit, converting the power transformed by the transformer unit into a prescribed alternating voltage and outputting the converted power to a load;
by a current detection unit, detecting a current value of alternating current (AC) that flows depending on the load;
by a timer unit, clocking an operation duration time of the power conversion unit;
by a storage unit, storing therein in-operation information that indicates a correspondence relation between a temperature of a prescribed portion of the transformer unit measured in advance, the operation duration time, and the current value;
by a temperature estimation unit, estimating a temperature of the prescribed unit at a certain operation duration time based on the current value detected by the current detection unit and the in-operation information; and
by an instruction unit, outputting prescribed instructions for heat-resistance protection of the transformer unit based on the temperature of the prescribed portion at the certain operation duration time estimated by the temperature estimation unit.

# FIG.1

# FIG.2

# FIG.3A

TEMPERATURE

SATURATION TEMPERATURE

SATURATION TEMPERATURE

SETTING TEMPERATURE

SATURATION TEMPERATURE

REFERENCE TEMPERATURE

- ● TEMPERATURE ACTUALLY MEASURED AT A POINT
- ■ TEMPERATURE ACTUALLY MEASURED AT B POINT
- ▲ TEMPERATURE ACTUALLY MEASURED AT C POINT

OPERATION DURATION TIME

# FIG.3B

TEMPERATURE

SETTING TEMPERATURE

REFERENCE TEMPERATURE

- ○ TEMPERATURE ACTUALLY MEASURED AT A POINT
- □ TEMPERATURE ACTUALLY MEASURED AT B POINT
- △ TEMPERATURE ACTUALLY MEASURED AT C POINT

OPERATION STOP ELAPSED TIME

# FIG.4

```
        ┌─────────────┐
        │    START    │
        └─────────────┘
               │
               ▼
   ┌───────────────────────────┐
   │  DISPLAY MODE SELECTION    │ ─── S101
   └───────────────────────────┘
               │
               ▼
            ╱─────────╲  S102
          ╱  IS TEMPERATURE ╲      NO
        ◁  ESTIMATION MODE    ▷───────────────┐
          ╲   SELECTED?    ╱                   │
            ╲─────────╱                        │
               │ YES    S103                   │  S104
               ▼                               ▼
 ┌───────────────────────────────┐   ┌─────────────────────────┐
 │ SET TEMPERATURE ESTIMATION MODE│   │ SET TIME ESTIMATION MODE │
 └───────────────────────────────┘   └─────────────────────────┘
               │                               │
               ▼◄──────────────────────────────┘
        ┌─────────────┐
        │     END     │
        └─────────────┘
```

# FIG.5

```
                    ┌──────────────┐
                    │    START     │
                    └──────┬───────┘
                           ▼
              ┌─────────────────────────┐
              │  OPERATION AND CLOCKING  │──── S201
              │    START INSTRUCTIONS    │
              └───────────┬─────────────┘
                          ▼
              ┌─────────────────────────┐
              │   CURRENT DETECTION      │──── S202
              │     INSTRUCTION          │
              └───────────┬─────────────┘
                          ▼
              ┌─────────────────────────┐
              │  PRESENT TEMPERATURE     │──── S203
              │ ESTIMATION INSTRUCTION   │
              └───────────┬─────────────┘
                          ▼
                                    S204
              ◇─────────────────────◇
         NO   │   IS OPERATION       │
      ◄───────│   PERFORMED?         │
              ◇─────────────────────◇
                          │ YES
                          ▼
                                    S205
              ◇─────────────────────◇       NO
              │   IS TIME INPUT      │──────────────┐
              │   OPERATION          │              │
              │   PERFORMED?         │              │
              ◇─────────────────────◇              │
                          │ YES                     │
                          ▼      S206               │     S208
              ┌─────────────────────────┐    ◇─────────────────◇   NO
              │ TEMPERATURE ESTIMATION   │    │  IS OPERATION    │──────┐
              │ INSTRUCTION AT INPUT TIME│    │ STOP PERFORMED?  │      │
              └───────────┬─────────────┘    ◇─────────────────◇      │
                          ▼      S207                │ YES   S209      │
              ┌─────────────────────────┐    ┌─────────────────┐      │
              │   INSTRUCTION FOR HEAT-  │    │ OPERATION STOP   │      │
              │  RESISTANCE PROTECTION   │    │   AND CLOCKING   │      │
              └─────────────────────────┘    │ FINISH           │      │    S210
                                             │ INSTRUCTIONS     │      │  ┌──────────────┐
                                             └────────┬────────┘      │  │ INSTRUCTION   │
                                                      │               └──│ CORRESPONDING │
                                                      │                  │ TO OPERATION  │
                                                      ▼                  └──────┬───────┘
                                             ┌──────────────┐                  │
                                             │     END      │◄─────────────────┘
                                             └──────────────┘
```

# FIG.6

START

CLOCKING START
INSTRUCTION ~S301

PRESENT TEMPERATURE
ESTIMATION INSTRUCTION ~S302

S303
IS OPERATION
PERFORMED? — NO

YES

S304
IS TIME INPUT
OPERATION
PERFORMED? — NO

YES

TEMPERATURE ESTIMATION
INSTRUCTION AT INPUT TIME S305

INSTRUCTION FOR
RESTARTING OPERATION S306

S307
IS OPERATION
START PERFORMED? — NO

YES S308
CLOCKING FINISH
INSTRUCTION

S309
INSTRUCTION
CORRESPONDING TO
OPERATION

END

# FIG.7

```
                    ┌──────────────┐
                    │    START     │
                    └──────┬───────┘
                           ↓
        ┌──────────────────────────────┐
        │  OPERATION AND CLOCKING       │──S401
        │  START INSTRUCTIONS           │
        └──────────────────────────────┘
                           ↓
        ┌──────────────────────────────┐
        │  CURRENT DETECTION            │──S402
        │  INSTRUCTION                  │
        └──────────────────────────────┘
                           ↓
        ┌──────────────────────────────┐
        │  PRESENT TEMPERATURE          │──S403
        │  ESTIMATION INSTRUCTION       │
        └──────────────────────────────┘
                           ↓        S404
                    ◇──────────────◇    YES
                    │ IS OPERATION │──────────────┐
                    │ PERFORMED?   │              ↓
                    ◇──────────────◇          S407
                           │ NO        ◇──────────────◇    NO
                           ↓           │ IS OPERATION │──────────┐
                    S405               │ STOP PERFORMED?│        │
        ┌──────────────────────┐      ◇──────────────◇          │
        │ INSTRUCTION FOR       │             │ YES  S408        │
        │ ESTIMATING TIME UNTIL │             ↓                  │
        │ SETTING TEMPERATURE   │   ┌────────────────────┐       │
        │ IS REACHED            │   │ OPERATION STOP AND │       │
        └──────────────────────┘   │ CLOCKING FINISH    │       │
                    │  S406         │ INSTRUCTIONS       │       │
                    ↓               └────────────────────┘  S409 │
        ┌──────────────────────┐             │      ┌──────────────────┐
        │ INSTRUCTION FOR HEAT- │             │      │ INSTRUCTION       │
        │ RESISTANCE PROTECTION │             │      │ CORRESPONDING TO  │
        └──────────────────────┘             │      │ OPERATION         │
                                             ↓      └──────────────────┘
                                      ┌──────────┐
                                      │   END    │
                                      └──────────┘
```

# FIG.8

```
          ┌─────────────┐
          │    START    │
          └──────┬──────┘
                 │
    ┌────────────▼────────────┐
    │   CLOCKING START        │── S501
    │   INSTRUCTION           │
    └────────────┬────────────┘
                 │
    ┌────────────▼────────────┐
    │  PRESENT TEMPERATURE    │── S502
    │  ESTIMATION INSTRUCTION │
    └────────────┬────────────┘
                 │       S503
            ◇────▼────◇          YES
           ╱  IS OPERATION  ╲──────────────┐
           ╲  PERFORMED?    ╱               │
            ◇─────────◇                     │         S506
                 │ NO                   ◇───▼───◇        NO
    ┌────────────▼────────┐ S504       ╱ IS OPERATION ╲──────┐
    │ INSTRUCTION FOR     │           ╲ START PERFORMED?╱     │
    │ ESTIMATING TIME     │            ◇──────◇               │
    │ UNTIL TEMPERATURE   │                │ YES              │
    │ AT WHICH OPERATION  │                │                  │
    │ CAN BE RESTARTED    │    ┌───────────▼──────┐ S507       │
    │ IS REACHED          │    │ CLOCKING FINISH  │            │
    └────────────┬────────┘    │ INSTRUCTION      │            │
                 │ S505        └──────┬───────────┘   ┌────────▼──────┐ S508
    ┌────────────▼────────┐           │               │ INSTRUCTION   │
    │ INSTRUCTION FOR     │           │               │ CORRESPONDING │
    │ RESTARTING OPERATION│           │               │ TO OPERATION  │
    └─────────────────────┘     ┌─────▼─────┐         └───────────────┘
                                │    END    │
                                └───────────┘
```

## INTERNATIONAL SEARCH REPORT

| International application No. |
| --- |
| PCT/JP2012/057048 |

A. CLASSIFICATION OF SUBJECT MATTER
*H02M3/00*(2006.01)i, *H02M7/48*(2007.01)i

According to International Patent Classification (IPC) or to both national classification and IPC

B. FIELDS SEARCHED

Minimum documentation searched (classification system followed by classification symbols)
H02M3/00, H02M7/48

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2004-180466 A (Hitachi Home & Life Solution, Inc.),<br>24 June 2004 (24.06.2004),<br>entire text; all drawings<br>(Family: none) | 1-9 |
| A | JP 2009-23378 A (Toyota Motor Corp.),<br>05 February 2009 (05.02.2009),<br>entire text; all drawings<br>(Family: none) | 1-9 |
| A | JP 2003-294130 A (Nissan Motor Co., Ltd.),<br>15 October 2003 (15.10.2003),<br>entire text; all drawings<br>(Family: none) | 1-9 |

☐ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 02 May, 2012 (02.05.12) | 22 May, 2012 (22.05.12) |

| Name and mailing address of the ISA/<br>Japanese Patent Office | Authorized officer |
| --- | --- |
| Facsimile No. | Telephone No. |

Form PCT/ISA/210 (second sheet) (July 2009)

## REFERENCES CITED IN THE DESCRIPTION

**Patent documents cited in the description**

• JP 2010110075 A